# EUROPEAN PATENT SPECIFICATION

(11) **EP 2 462 012 B1**
(45) Date of publication and mention of the grant of the patent: **05.07.2017**
(21) Application number: 10744710.4
(22) Date of filing: 06.08.2010
(51) Int. Cl.: B60T 7/10, B60T 7/12, B60T 8/17, B60T 13/26, B60T 13/68, B60T 17/08, B60T 17/22, B60T 8/1755

(54) **TRAILER PARK BRAKE VALVE ARRANGEMENT**
ANHÄNGER-PARKBREMSENVENTILANORDNUNG
AGENCEMENT DE SOUPAPE DE FREIN DE STATIONNEMENT DE REMORQUE

(30) Priority: 07.08.2009 GB 0913937
(43) Date of publication of application: 13.06.2012
(73) Proprietor: Knorr-Bremse Systems for Commercial Vehicles Limited, Emersons Green, Bristol BS16 7FE (GB)
(72) Inventor: FRY, Matthew, Emerson Green Bristol BS16 7FE (GB); ROSS, Colin, Emerson Green Bristol BS16 7FE (GB)
(74) Representative: JENSEN & SON
(86) International application number: PCT/GB2010/001494
(87) International publication number: WO 2011/015831

(56) References cited:
- EP-A2- 2 058 186
- WO-A1-2008/114039
- WO-A2-2006/125615
- WO-A2-2007/010490
- WO-A2-2007/013027
- DE-A1- 3 444 639
- DE-A1- 19 818 982
- DE-A1-102007 002 020
- DE-A1-102007 014 423
- DE-A1-102007 061 908
- DE-U1- 20 122 779
- GB-A- 2 310 695
- GB-A- 2 417 764
- GB-A- 2 448 007

## Description

The invention relates to a park brake valve arrangement for a trailer of a commercial vehicle tractor/trailer.

Modem braking systems for tractor/trailer units are invariably fluid-operated, the fluid typically being air, for economic and practical reasons. A pressurised air supply is generated by an engine-driven compressor on the tractor which supplies air to the trailer through a supply line, so that when the service brake is applied by the driver, the brakes on the tractor and the trailer are applied by the supply of compressed air to the individual wheel brakes. It is also known to have a spring-applied brake system in which the braking force is generated by a spring in a spring actuator, which is biased in a direction to apply the brake. In normal operation, the brake is held in the off position by the application of compressed air acting counter to the braking force of the spring. In an emergency, if the compressed air supply is lost, the spring actuator automatically applies the brake on the trailer to bring the trailer to a standstill. An alternative arrangement is also known in which in an emergency, if the compressed air supply is lost, pressure from the reservoir is applied to the individual wheel brakes to bring the trailer to a standstill.

It is also known for such trailers to have a parking brake in which the braking force is supplied by a spring actuator, the brake being normally held off by an air supply. The control valve for the parking brake is operable manually to vent the valve to atmosphere and hence apply the parking brake. In use, when parking a trailer, the driver has to decouple the supply line connection between the tractor and trailer and also an electrical connection through which electrical components on the trailer are connected to the tractor electrical supply. The correct procedure at this stage is that the driver should manually operate the parking brake valve to ensure that the parking brake is applied. The driver can then uncouple the pivotal connection between the tractor and trailer to enable the tractor to be driven away leaving the trailer in the parked condition.

It will be apparent from the earlier description that when the supply line is decoupled from the trailer, the trailer brakes are automatically applied by the compressed air contained in the reservoir on the trailer or the release of pressure from the spring brakes. As in this condition, which equates to the emergency braking mode, there is an open connection between the reservoir and the brakes, the brakes are held on and the trailer held stationary, that is braked, by these means.

The unintended consequence of this is that drivers often rely on the braking achieved in this way when parking a trailer and, either through laziness, inadvertence or a reluctance to get dirty, because the valves are often situated in an exposed, low down, position on the trailer, they do not operate the manual valve to apply the park brake. This can have dangerous consequences which have led to fatalities.

The brakes are held on in this "emergency mode", and the trailer held stationary, by the compressed air in the system but, inevitably, there is a slight leakage of air in the system, with the result that the air gradually leaks out until the brakes are no longer held on, so that where the emergency valve applies the service brakes the trailer can roll away. A further dangerous situation can arise when a driver re-couples a tractor to a trailer which has been parked in this way. As soon as the driver couples the supply line to the trailer, the valve arrangement on the trailer is reset to cancel the emergency braking mode, with the result that the trailer is no longer braked and can either roll away backwards, breaking the supply line, or can roll forwards with the risk of crushing the driver between the trailer and the tractor cab. Furthermore, if the driver has left the tractor, without putting on the tractor parking brake, as soon as the supply line is connected the emergency brake is released and the whole tractor/trailer can roll away.

GB2417764 discloses a trailer park valve in which the parking brake is moved to a locked condition when the pneumatic and the electrical connection are removed. To release the valve from the locked position to the drive position, the driver has to manually reconnect both the electrical and pneumatic connections. Whilst this valve represents a significant safety enhancement over the prior art systems, the valve construction is different to the standard park and shunt valve arrangements in use.

DE20122779 discloses a further park valve arrangement that is background prior art.

The present invention therefore seeks to provide an alternative valve arrangement According to the invention there is provided a park valve arrangement for a trailer for a commercial vehicle having a main air supply line, electrical connection and a reservoir, which trailer is provided with spring applied brakes adapted to be held in an off position by pneumatic pressure, wherein the valve arrangement controls the application of pressure to the spring brakes such that when the main air supply is absent or disconnected the spring brakes are applied, wherein if the electrical connection is present, the spring brakes are applied but park control released, wherein if the electrical connection is disconnected, the spring brakes are applied but park control set such that the valve is operable with the main supply and electrical connection disconnected to enable the spring brakes to be released.

Preferably, when the main supply is exhausted and an electrical connection present, air pressure is supplied from the reservoir to the inlet of the first two way valve and the inlet of the second two way valve, such that the electrically biased two valve provides a control signal to the park valve enabling this to remain in the Drive position.

Preferably, when the electrical connection is disconnected, the electrically biased two way valve moves to a second position, opening its outlet and supplying a control signal to the park valve causing it to move to a second position in which the pressure to the spring brakes is exhausted via the exhaust, thereby the spring brakes being applied and the park control being set.

In the known systems if the control (or "yellow") line from the truck to the trailer is cut or open, the truck brake system will detect this condition and the truck brake system will attempt to apply the trailer brakes via the service (or "red") line. In the known systems, if there is also a loss of pressure in the service line, which may indicate a break away of the trailer, the park brake is automatically set. The park brake then remains set and continues to brake until it is manually reset, which can cause problems if the pressure is returned to the service line. The present invention advantageously provides that if the control line is cut or open, then the electrical connection ensures that the brakes are applied but if the service line pressure is released then the trailer brakes will still work, thereby ensuring compliance with Regulation ECE13.

An exemplary embodiment of the invention will now be described in greater detail with reference to the drawings in which:
Fig. 1 shows schematically the brake valve circuit diagram;
Fig. 2 shows the valve arrangement in the drive position;
Fig. 3 shows the valve arrangement with the automatic brake applied;
Fig. 4 shows the valve arrangement with the trailer disconnected from the tractor;
Fig. 5 shows the valve arrangement set for manoeuvring a parked disconnected trailer.

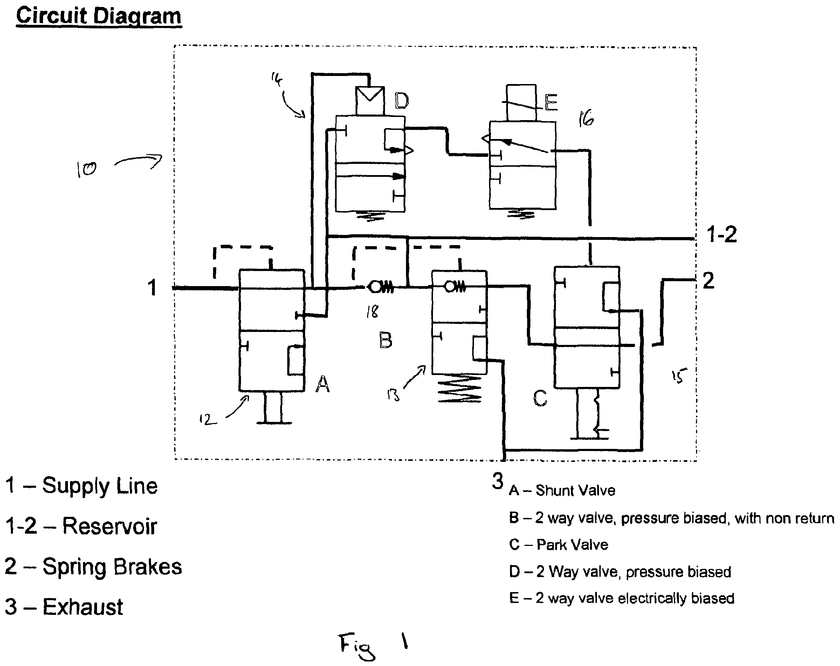

Figure 1 shows schematically a valve arrangement 10 in which air is supplied from a main supply line 1 to a manually operable shunt valve 12. The outlet of the shunt valve 12 is passed to an inlet of a two way valve 13 via a non-return valve 18, which two way valve 13 is pressure biased with a non-return, and to the control port of a pressured biased two valve 14. A first outlet of the valve 13 is connected to an inlet of a park valve 15 and a second outlet of the valve 13 is connected to an exhaust 3. The two way valve 14 also receives an input from a trailer based reservoir, which input is also in pneumatic connection with an outlet of the shunt valve 12 and the inlet of the valve 13. The outlet of the two way valve 14 is connected to an inlet of an electrically biased two way valve 16, the outlet of which provides the pneumatic control signal to the park valve 15. A first outlet of the park valve 15 is connected to the spring brakes of the trailer and a second outlet of the park valve 15 is connected to the exhaust 3.

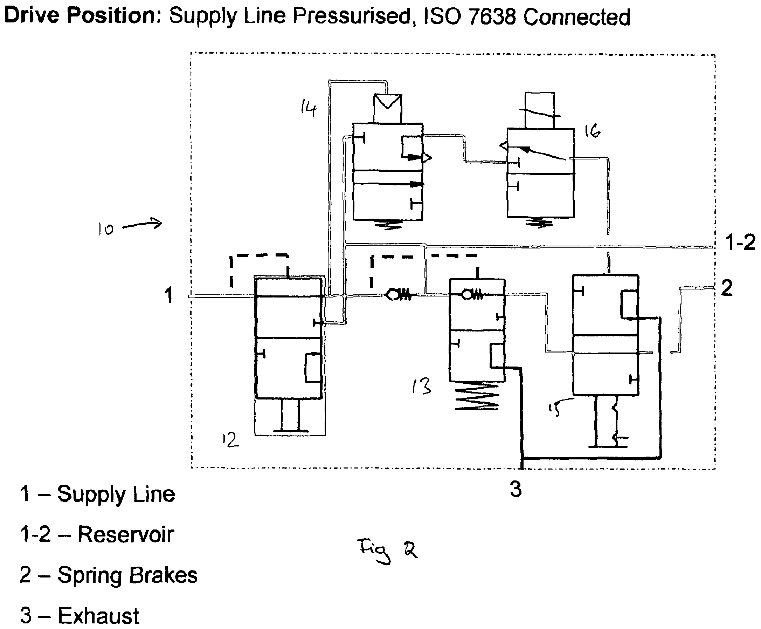

Figure 2 shows the valve arrangement in the Drive position, in which the main supply line 1 is pressurised and the ISO 7638 electrical connection from the tractor to the trailer EBS is connected. In this condition, the shunt valve 12 is in fluid connection with the inlet of two way valve 13 and supplies a control signal to the control input of the two way valve 14. The outlet of the two valve way 13 is in fluid connection with the inlet of the park valve 15, which supplies pressure to the spring brakes 2. As the spring brakes are biased into the on position, this pressure holds the spring brakes off. The main supply line is also in fluid communication with the reservoir and accordingly can charge this as necessary. The control signal supplied to the valve 14 ensures that the outlet of the valve 14 is closed and accordingly the valve 16 is unpressurised and there is no control signal to the park valve 15.

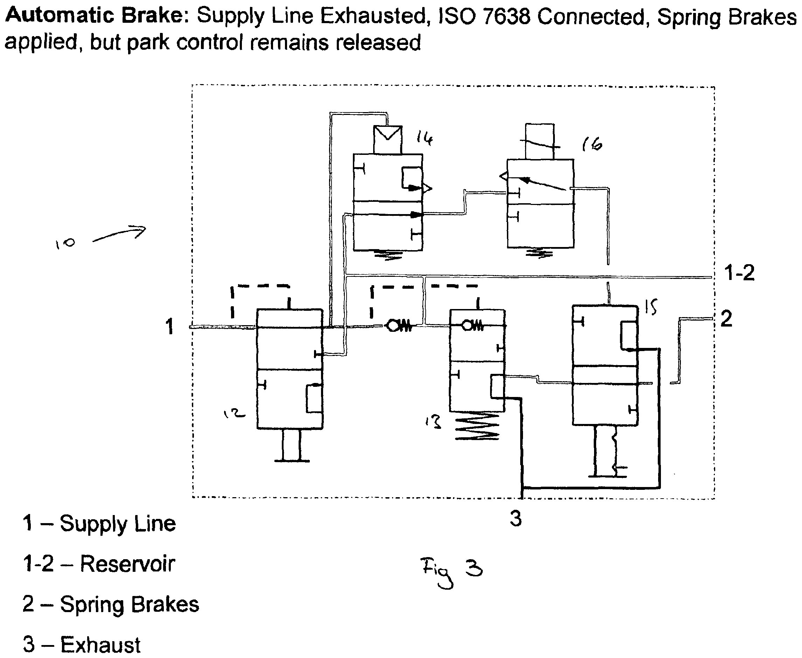

Figure 3 shows the valve arrangement when the automatic brake is applied. In this condition, the main supply line is exhausted but the electrical connection from the ISO 7638 connector is still present. This condition could, for example, indicate an incipient break away. In this condition, the spring brakes are applied but the park control remains released. The output of shunt valve 12 is depressurised and hence the control signal to the two way valve 14 is changed, causing this to change position. In this condition, air pressure is supplied from the reservoir to the inlet of the two way valve 13 and the inlet of the two way valve 14. The fluid connection between the two way valve 14 and the electrically biased two way valve 16 is pressurised but the outlet of the two way valve 16 is closed so that the control signal to the park valve 15 remains the same as in the Drive position. As the pressure on the inlet of the two way valve 13 is reduced, the pressure bias of this valve causes it to move to a second position removing the air supply to the park valve 15, which is accordingly depressurised via two way valve 16 to the exhaust 3. There is accordingly no pressure on the outlet of the park valve 15 and hence no pressure to withhold the spring brakes, which are then applied. In this condition the park valve 15 is not directly connected to the exhaust and so the park control remains released.

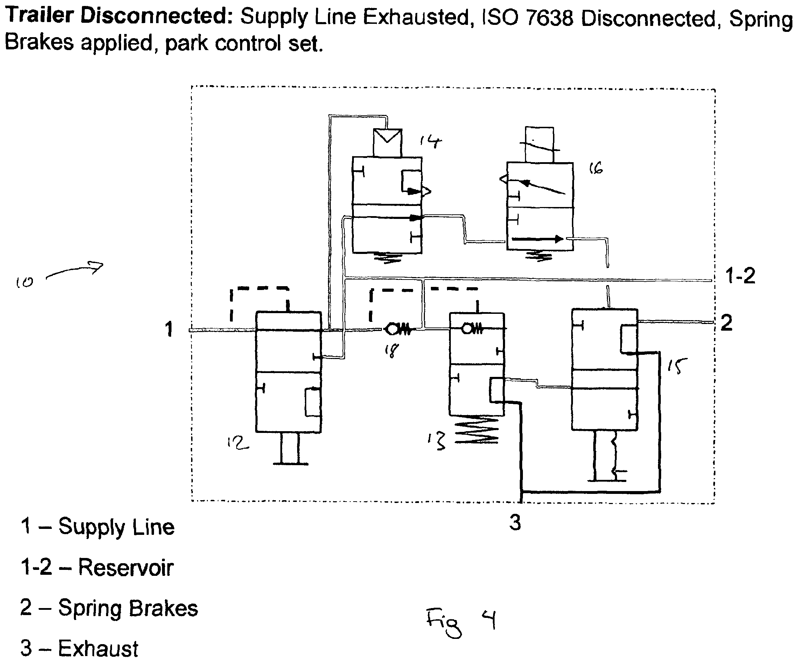

Figure 4 shows the valve arrangement when the pneumatic connection trailer has been completely disconnected from the tractor. This could occur, for example, when the trailer is parked or if it has broken away from the tractor. In this condition, the main supply line is exhausted and the IS07638 is disconnected so that the trailer has no electrical supply. This results in the spring brakes being applied and the park control being set. In the absence of the main supply line, the output of shunt valve 12 is depressurized and the control signal to the two way valve 14 is changed from the Drive position, causing this valve to change position. The inlet of the two way valve 14 is still pressurized from the reservoir and the outlet supplies a pressure to the valve 16. However, as the electrically biased two way valve 16 now no longer receives an electrical control signal, it moves to a second position, opening its outlet and supplying a control signal to the park valve 15 causing it to move to a second position in which the pressure to the spring brakes is exhausted via the exhaust 3 and the connection to the two valve 13 is closed, although the outlet of this valve also remains depressurized. When the pneumatic connection is restored, the spring brakes remain applied until they are manually reset.

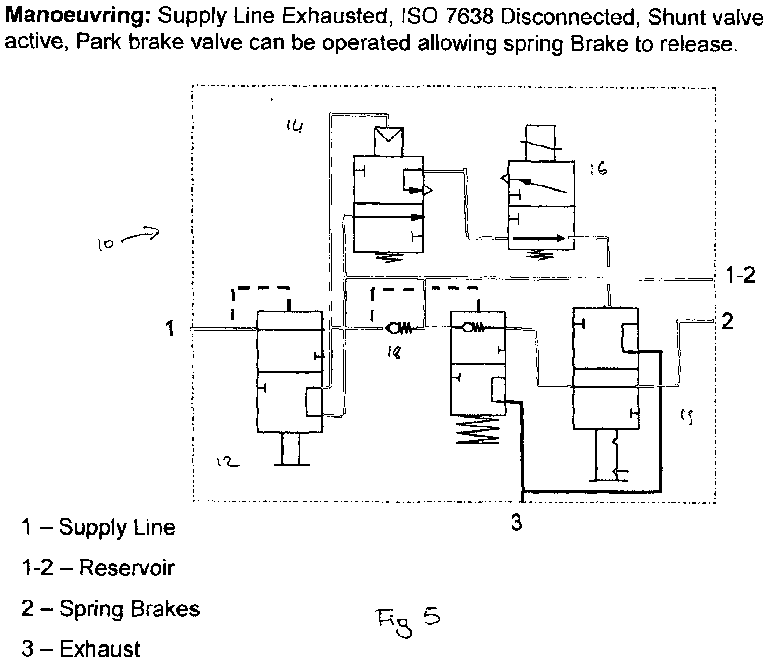

Figure 5 shows the valve in the condition for manoeuvring as it is sometimes necessary to move a parked disconnected trailer when a tractor is not present, for example in a loading depot. In this condition the main supply line is exhausted and the IS07638 is disconnected so that the trailer has no electrical supply. The shunt valve 12 is manually actuated to the position shown in Figure 5, in which it receives a supply pressure from the reservoir and can supply a control pressure to the two way valve 14. Supplying this control pressure causes the valve 14 to close its outlet and remove the pressure in the conduit to the valve 16, which in turn removes the control signal from the park valve 15. This allows the valve 15 to be moved to the position it has in the Drive position and a pressure is then supplied via the two way valve 13 to the valve 15 and to the spring brakes. This supply of pressure to the spring brakes biases them to the off position so that it becomes possible to move the trailer.

The functionality of valve 13 could be moved to another component in the braking system such as the EBS - in this case the other component would be a valve located after port 2.

The valve arrangement of the invention has the advantage over known alternatives in that it can be offered as an add-on to other products and so need not be included in markets where this type of valve is not desired or required.

## Claims

1. A park valve arrangement for a trailer for a commercial vehicle having a main supply line (1), electrical connection and a reservoir, which trailer is provided with spring applied brakes (2) adapted to be held in an off position by pneumatic pressure, **characterised in that** the valve arrangement controls the application of pressure to the spring brakes (2) such that when the main supply (1) is absent or disconnected the spring brakes (2) are applied, wherein if the electrical connection is present, the spring brakes (2) are applied but park control can be released, wherein if the electrical connection is disconnected, the spring brakes (2) are applied but park control set such that the valve arrangement is operable with the main supply (1) and electrical connection disconnected to enable the spring brakes (2) to be released.

2. A park valve arrangement according to Claim 1, wherein the arrangement comprises a shunt valve (12) adapted to receive air from the main supply line (1), which shunt valve (12) is connected to a two way valve (13), which two way valve (13) is connected to a park valve (15), which park valve (15) is adapted to provide park control.

3. A park valve arrangement according to Claim 2, wherein the shunt valve (12) is further connected to a second two way valve (14) in parallel to the first two way valve(13), which second two way valve (14) is connected with an electrically biased two way valve (16), the output of which is connected to the park valve (15).

4. A park valve arrangement according to Claim 3, wherein, when the main supply (1) is exhausted and an electrical connection present, air pressure is supplied from the reservoir to the inlet of the first two way valve (13) and the inlet of the second two way valve (14), such that the electrically biased two valve (16) provides a control signal to the park valve (15) enabling this to remain in the Drive position.

5. A park valve arrangement according to Claim 3 or Claim 4, wherein when the electrical connection is disconnected, the electrically biased two way valve (16) moves to a second position, opening its outlet and supplying a control signal to the park valve (15) causing it to move to a second position in which the pressure to the spring brakes is exhausted via an exhaust (3), thereby the spring brakes (2) being applied and the park control being set.

6. A park valve arrangement according to Claim 3, wherein the shunt valve (12) supplies a pressure from the reservoir to the second two way valve (14), which second two way valve (14) removes the control signal from the park valve (15), thereby enabling the park valve (15) to be moved to a Drive position.

7. A park valve arrangement according to any one of Claims 2 to 5, wherein the shunt valve (12) can be connected to the reservoir.

8. A park valve arrangement according to Claim 4, wherein in the Drive position a pressure is supplied to the spring brakes (2) to bias them to the off position.

9. A park valve arrangement according to Claim 2, wherein the first two way valve 13 is replaced by another component in the braking system, such as the electronic braking system (EBS).

## Patentansprüche

1. Parkbremsenventilanordnung für einen Anhänger für ein Nutzfahrzeug mit einer Hauptzufuhrleitung (1), einer elektrischen Verbindung und einem Reservoir, wobei der Anhänger mit Federkraftbremsen (2) ausgestattet ist, die so ausgelegt sind, dass sie durch pneumatischen Druck in einer Aus-Position gehalten werden, **dadurch gekennzeichnet, dass** die Ventilanordnung die Druckbeaufschlagung der Federbremsen (2) so steuert, dass, wenn die Hauptzufuhr (1) nicht vorhanden oder getrennt ist, die Federbremsen (2) betätigt werden, wobei, wenn die elektrischen Verbindung vorhanden ist, die Federbremsen (2) betätigt werden, aber die Parkbremse gelöst werden kann, wobei, wenn die elektrische Verbindung unterbrochen ist, die Federbremsen (2) betätigt werden, die Parkbremsung jedoch so erfolgt, dass die Ventilanordnung bei getrennter Hauptzufuhrleitung (1) und elektrischer Verbindung dahingehend betriebsfähig ist, dass sie ein Lösen der Federbremsen (2) ermöglicht.

2. Parkbremsenventilanordnung nach Anspruch 2, wobei die Anordnung ein Shuntventil (12) umfasst, dass darauf ausgelegt ist, Luft von der Hauptzufuhrleitung (1) aufzunehmen, wobei das Shuntventil (12) mit einem Zweiwegeventil (13) verbunden ist und das Zweiwegeventil (13) mit einem Parkventil (15) verbunden ist und das Parkventil (15) so ausgelegt ist, dass es eine Parkbremsung bereitstellt.

3. Parkbremsenventilanordnung nach Anspruch 2, wobei das Shuntventil (12) parallel zum ersten Zweiwegeventil (13) weiter mit einem zweiten Zweiwegeventil (14) verbunden ist und das zweite Zweiwegeventil (14) mit einem elektrisch gestellten Zweiwegeventil (16) verbunden ist, dessen Ausgabe mit dem Parkventil (15) verbunden ist.

4. Parkbremsenventilanordnung nach Anspruch 3, wobei, wenn die Hauptzufuhr (1) entlüftet und eine elektrische Verbindung vorhanden ist, Luftdruck vom Reservoir zum Einlass des ersten Zweiwegeventils (13) und zum Einlass des zweiten Zweiwegeventil (14) geführt wird, so dass das elektrisch gestellte Zweiwegeventil (16) ein Steuersignal an das Parkventil (15) schickt, das es diesem ermöglicht, in der Fahrposition zu bleiben.

5. Parkbremsenventilanordnung nach Anspruch 3 oder Anspruch 4, wobei sich, wenn die elektrische Verbindung getrennt ist, das elektrisch gestellte Zweiwegeventil (16) in eine zweite Position bewegt, wodurch sich sein Auslass öffnet und ein Steuersignal an das Parkventil (15) schickt, das dieses dazu veranlasst, sich in eine zweite Position zu bewegen, in der der Druck auf die Federbremsen durch eine Abluftleitung (3) entlüftet wird, wodurch die Federbremsen (2) betätigt werden und die Parkbremsung erfolgt.

6. Parkbremsenventilanordnung nach Anspruch 3, wobei das Shuntventil (12) einen Druck vom Reservoir zum zweiten Zweiwegeventil (14) führt und das zweite Zweiwegeventil (14) das Steuersignal vom Parkventil (15) entfernt, so dass das Parkventil (15) in eine Fahrposition bewegt werden kann.

7. Parkbremsenventilanordnung nach einem der Ansprüche 2 bis 5, wobei das Shuntventil (12) mit dem Reservoir verbunden werden kann.

8. Parkbremsenventilanordnung nach Anspruch 4, wobei in der Fahrposition den Federbremsen (2) Druck zugeführt wird, um sie in die Aus-Position zu stellen.

9. Parkbremsenventilanordnung nach Anspruch 2, wobei das erste Zweiwegeventil (13) durch eine andere Komponente des Bremssystems wie das elektronische Bremssystem (EBS) ersetzt wird.

## Revendications

1. Agencement de soupape de stationnement pour une remorque pour un véhicule commercial ayant une ligne d'alimentation principale (1), une connexion électrique et un réservoir, laquelle remorque est pourvue de freins à ressort (2) adaptés à être maintenus dans une position de repos par pression pneumatique, **caractérisé en ce que** l'agencement de soupape commande l'application de pression aux freins à ressort (2) de sorte que, lorsque l'alimentation principale (1) est absente ou déconnectée, les freins à ressort (2) sont appliqués, dans lequel, si la connexion électrique est présente, les freins à ressort (2) sont appliqués mais la commande de stationnement peut être relâchée, dans lequel, si la connexion électrique est déconnectée, les freins à ressort (2) sont appliqués mais la commande de stationnement réglée de sorte que l'agencement de soupape peut être opéré avec l'alimentation principale (1) et la connexion électrique déconnectées pour permettre aux freins à ressort (2) d'être relâchés.

2. Agencement de soupape de stationnement selon la revendication 1, dans lequel l'agencement comprend une soupape de dérivation (12) adaptée à recevoir de l'air de la ligne d'alimentation principale (1), laquelle soupape de dérivation (12) est connectée à un clapet double (13), lequel clapet double (13) est connecté à une soupape de stationnement (15), laquelle soupape de stationnement (15) est adaptée à fournir une commande de stationnement.

3. Agencement de soupape de stationnement selon la revendication 2, dans lequel la soupape de dérivation (12) est en outre connectée à un second clapet double (14) en parallèle au premier clapet double (13), lequel second clapet double (14) est connecté à un clapet double à polarisation électrique (16) dont la sortie est connectée à la soupape de stationnement (15).

4. Agencement de soupape de stationnement selon la revendication 3, dans lequel, lorsque l'alimentation principale (1) est échappée et une connexion électrique présente, de la pression d'air est fournie du réservoir à l'entrée du premier clapet double (13) et l'entrée du second clapet double (14) de sorte que le clapet double à polarisation électrique (16) fournit un signal de commande à la soupape de stationnement (15), lui permettant de rester dans la position de conduite.

5. Agencement de soupape de stationnement selon la revendication 3 ou la revendication 4, dans lequel, lorsque la connexion électrique est déconnectée, le clapet double à polarisation électrique (16) se déplace vers une seconde position, ouvrant sa sortie et fournissant un signal de commande à la soupape de stationnement (15), l'amenant à se déplacer vers une seconde position dans laquelle la pression aux freins à ressort est échappée par le biais d'un échappement (3), les freins à ressort (2) étant de ce fait appliqués et la commande de stationnement étant réglée.

6. Agencement de soupape de stationnement selon la revendication 3, dans lequel la soupape de dérivation (12) fournit une pression du réservoir au second clapet double (14), lequel second clapet double (14) élimine le signal de commande de la soupape de stationnement (15), permettant de ce fait à la soupape de stationnement (15) d'être déplacée vers une position de conduite.

7. Agencement de soupape de stationnement selon l'une quelconque des revendications 2 à 5, dans lequel la soupape de dérivation (12) peut être connectée au réservoir.

8. Agencement de soupape de stationnement selon la revendication 4, dans lequel une pression est fournie aux freins à ressort (2) dans la position de conduite pour les incliner vers la position de repos.

9. Agencement de soupape de stationnement selon la revendication 2, dans lequel le premier clapet double 13 est remplacé par un autre composant dans le système de freinage, tel que le système de freinage électronique (EBS).
